(19) Europäisches Patentamt
European Patent Office
Office européen des brevets

(11) EP 4 166 609 B1

(12) EUROPEAN PATENT SPECIFICATION

(45) Date of publication and mention of the grant of the patent:
**29.11.2023 Bulletin 2023/48**

(21) Application number: **21202561.3**

(22) Date of filing: **14.10.2021**

(51) International Patent Classification (IPC):
***C08L 23/06*** *(2006.01)*

(52) Cooperative Patent Classification (CPC):
(C-Sets available)
**C08L 23/06;** C08K 2003/2224; C08L 2201/02; C08L 2207/062; C08L 2207/064 (Cont.)

(54) **FLAME RETARDANT POLYMER COMPOSITION**

FLAMMHEMMENDE POLYMERZUSAMMENSETZUNG

COMPOSITION DE POLYMÈRE IGNIFUGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.04.2023 Bulletin 2023/16**

(73) Proprietor: **Borealis AG**
**1020 Vienna (AT)**

(72) Inventors:
- **NILSSON, Susanne**
  **444 86 Stenungsund (SE)**
- **KARLSSON, Victoria**
  **442 50 Ytterby (SE)**
- **SULTAN, Bernt-Åke**
  **531 30 Lidköping (SE)**
- **RIBARITS, Elisabeth**
  **444 86 Stenungsund (SE)**
- **KARLSSON, Linus**
  **444 86 Stenungsund (SE)**
- **EFRAIMSSON, Lars**
  **444 86 Stenungsund (SE)**

(74) Representative: **Maiwald GmbH**
**Elisenhof**
**Elisenstraße 3**
**80335 München (DE)**

(56) References cited:
**WO-A1-2021/111006**
**JP-A- H0 931 253**
**JP-A- 2002 226 641**
**US-A1- 2012 101 208**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/06, C08K 3/22, C08L 23/0815, C08L 23/0869**

## Description

The present invention relates to a flame retardant polymer composition and the use of said flame retardant polymer composition for the production of an article, especially a wire or cable comprising a layer, such as a jacketing layer, comprising said flame retardant polymer composition.

## Background art

Flame retardant compounds typically suffer from either limitations in mechanical properties, such as tensile properties and tear strength, or in flame retardant (FR) properties. There are growing demands on flame retardant products that can fulfil both mechanical and FR properties. One example of such a high demand product is the ST12 jacket described in IEC 60840:2020 "Power cables with extruded insulation and their accessories for rated voltages above 30 kV (Um= 36 kV) up to 150 kV (Um = 170 kV) - Test methods and requirements" (Um = maximum permitted voltage). There are higher mechanical demands in the standard compared to low voltage jacketing layers, with tensile limits of 12.5 MPa tensile strength and 300% elongation at break both before and after thermal ageing for 10 days at 110°C. Commercial FR products today often suffer from inferior tensile properties and/or limited flame retardancy. Another problem seen with flame retardant materials is cracking of the cable sheath, either on a cable reel, during installation and use or even during a fire. The cracking properties of a material can be understood by measurements of tear strength at different temperatures.

WO 2021/111006 A1 discloses a flame retardant polymer composition with good flame retardant properties and acceptable mechanical properties for low voltage cable applications but not sufficient for the above described higher mechanical demands described in IEC 60840:2020.

Thus, there is a need in the art for flame retardant polymer compositions, which show sufficient flame retardant properties and improved mechanical properties in tensile strength, elongation at break and tear strength e.g. for meeting the requirements for cable jackets for medium and high voltage cables as described in IEC 60840:2020.

## Summary of the invention

The present invention relates to a flame retardant polymer composition comprising

(A) 2.0 to 15.0 wt% of a copolymer of ethylene comprising units selected from the group consisting of methyl acrylate, methyl methacrylate or mixtures thereof;
(B) 0 to 4.0 wt% of a polyethylene and/or polypropylene containing units originating from maleic acid anhydride;
(C) 0.1 to 3.0 wt% of a silicon fluid and/or silicone gum;
(D) 40.0 to 55.0 wt% of a magnesium hydroxide;
(E) 2.0 to 15.0 wt% of a copolymer of ethylene and alpha olefin comonomer units having from 4 to 10 carbon atoms, which has a density of from 860 to 910 kg/$m^3$, determined according to ISO 1183;
(F) 18.0 to 35.0 wt% of a copolymer of ethylene and alpha olefin comonomer units having from 4 to 10 carbon atoms, which has a density of from 920 to 960 kg/$m^3$, determined according to ISO 1183, and a melt flow rate $MFR_5$ of from 0.05 to 2.50 g/10 min, determined according to ISO 1133 at a temperature of 190°C and a load of 5.0 kg; and
(G) 0 to 8.0 wt% of carbon black,

wherein all weight percentages are based on the total weight of the flame retardant polymer composition.

Further, the present invention relates to an article comprising the flame retardant polymer composition as described above or below.

Still further, the present invention relates to the use of the flame retardant polymer composition as described above or below for the production of an article.

## Definitions

A polyethylene in the sense of the present invention is a polymer with a molar majority (i.e. at least 50 mol%) of ethylene monomer units.

A copolymer of ethylene is a polymer with a molar majority of ethylene monomer units and at least one unit of a different chemical moiety (e.g. selected from alpha-olefins, methyl acrylate, methyl methacrylate, maleic acid anhydride). The units of a different chemical moiety can be introduced into the polymer by copolymerization (i.e. comonomer units) or by grafting onto the polymeric backbone as known in the art.

A polypropylene in the sense of the present invention is a polymer with a molar majority (i.e. at least 50 mol%) of propylene monomer units.

A copolymer of propylene is a polymer with a molar majority of propylene monomer units and at least one unit of a different chemical moiety (e.g. selected from maleic acid anhydride). The units of a different chemical moiety can be introduced into the polymer by copolymerization (i.e. comonomer units) or by grafting onto the polymeric backbone as known in the art.

Throughout the present application, the particle size of a fraction of a particulate material is described by its particle size distribution. The value d, represents the diameter relative to which x % by weight of the particles have diameters less than dx. The $d_{50}$ value is thus the "median particle size" at which 50 wt% of all particles are smaller than the indicated particle size.

Magnesium hydroxide materials which are used as component D) according to the present invention may comprise impurities like calcium oxide, silicon dioxide and iron oxide. It is preferred that the component D) comprises from 80 to 98 wt% magnesium hydroxide, preferably more than 85 wt% magnesium hydroxide, more preferably more than 90 wt% magnesium hydroxide and still more preferably more than 92.5 wt% magnesium hydroxide. Amount and nature of the impurities may vary depending on the source of the starting mineral.

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

## Detailed description of the invention

Component (A)

The flame retardant polymer composition comprises a copolymer of ethylene comprising units selected from the group consisting of methyl acrylate, methyl methacrylate or mixtures thereof in an amount of 2.0 to 15.0 wt%, preferably 3.0 to 14.0 wt%, more preferably 4.0 to 13.0 wt%, still more preferably 5.5 to 12.5 wt%, based on the total weight of the flame retardant polymer composition as component (A).

Component (A) is preferably a copolymer comprising and preferably consisting of ethylene units and methyl acrylate units.

The content of units selected from the group consisting of methyl acrylate, methyl methacrylate or mixtures thereof, preferably the content of methyl acrylate units, is preferably in the range of 10 to 35 wt% and preferably in the range of 20 to 30 wt% based on the total weight of component (A).

Preferably component (A) has a density determined according to ISO 1183 in the range of 920 to 960 $kg/m^3$ and preferably in the range of 935 to 950 $kg/m^3$.

It is preferred that component (A) has a $MFR_2$, determined according to ISO 1133 (2.16 kg, 190°C) in the range of 0.1 to 10 g/10 min, preferably in the range of 0.1 to 5.0 g/10 min and more preferably in the range of 0.2 to 0.7 g/10 min.

In one preferred embodiment component (A) comprises units with hydrolysable silane-groups, wherein the units with hydrolysable silane-groups are preferably represented by formula (I):

$$R^1SiR^2_qY_{3-q} \qquad (I)$$

wherein

$R^1$ is an ethylenically unsaturated hydrocarbyl, hydrocarbyloxy or (meth)acryloxy hydrocarbyl group,
each $R^2$ is independently an aliphatic saturated hydrocarbyl group,
Y which may be the same or different, is a hydrolysable organic group and
q is 0, 1 or 2.

The content of the comonomer units comprising a crosslinkable silane group is preferably 0.2 to 4.0 wt%, more preferably in the range of from 0.4 to 2.0 wt%, based on the overall weight of component (A).

Suitable components which may be used as component (A) according to the present invention are commercially available, for example from DuPont (USA) under the name Elvaloy® AC 1125.

Component (B)

The flame retardant polymer composition comprises a polyethylene and/or polypropylene containing units originating from maleic acid anhydride in an amount of 0 to 4.0 wt%, preferably 0.5 to 3.5 wt%, more preferably 1.0 to 3.0 wt%, still more preferably 1.5 to 2.5 wt%, based on the total weight of the flame retardant polymer composition as

component (B).

Component (B) is preferably obtained by copolymerising and/or grafting polyethylene with maleic acid anhydride, whereby a grafted linear low density polyethylene is preferred, more preferably the content of maleic acid anhydride is in the range of 0.3 to 2.0 wt%.

Preferably component (B) has a density determined according to ISO 1183 in the range of 910 to 950 kg/$m^3$ and preferably in the range of 920 to 940 kg/$m^3$.

It is preferred that component (B) has a $MFR_2$ determined according to ISO 1133 (2.16 kg, 190°C for polyethylene and 2.16 kg, 230°C for polypropylene) in the range of 0.5 to 5.0 g/10 min and preferably in the range of 1.5 to 2.5 g/10 min.

Suitable polyethylene and/or polypropylene containing units originating from maleic acid anhydride which may be used as component (B) according to the present invention are commercially available, for example from HDC Hyundai EP Co., Ltd. under the tradename Polyglue® GE300C.

## Component (C)

The flame retardant polymer composition comprises a silicon fluid and/or silicone gum in an amount of 0.1 to 3.0 wt%, preferably 0.3 to 2.8 wt%, more preferably 0.5 to 2.5 wt%, still more preferably 0.7 to 2.3 wt%, based on the total weight of the flame retardant polymer composition as component (C).

Component (C) preferably is a silicone fluid or silicone gum selected from the group consisting of polysiloxane, preferably polydimethylsiloxane, and siloxanes containing alkoxy or alkyl functional groups and mixtures thereof, more preferably component (C) is an organomodified siloxane.

It is especially preferred that component (C) is an organopolysiloxane polymer comprising chemically combined siloxy units. Preferably, the siloxy units are selected from the group consisting of $R_3SiO_{0.5}$, $R_2SiO$, $R^1SiO_{1.5}$, $R^1R_2SiO_{0.5}$, $RR^1SiO$, $R^1{}_2SiO$, $RSiO_{1.5}$ and $SiO_2$ units and mixtures thereof in which each R represents independently a saturated or unsaturated monovalent hydrocarbon substituent, and each $R^1$ represents a substituent such as R or a substituent selected from the group consisting of a hydrogen atom, hydroxyl, alkoxy, aryl, vinyl or allyl groups.

It is preferred that component (C) is an organopolysiloxane polymer having a viscosity of approximately 600 to 300 $\times$ $10^6$ centipoise at 25°C.

An example of an organopolysiloxane which has been found to be suitable is a polydimethylsiloxane polymer having a viscosity of approximately 20 $\times$ $10^6$ centipoise at 25°C.

Preferably component (C) contains up to 50 wt% by weight fumed silica fillers of the type commonly used to stiffen silicone rubbers.

Suitable silicone fluids and/or a silicon gums which may be used as component (C) are commercially available, for example from Evonik Nutrition & Care GmbH (Germany) as Tegomer® 6264, from DuPont as DOW CORNINGTM AMB-12235 MASTERBATCH or from Borealis AG (Austria) as FR4897.

## Component (D)

The flame retardant polymer composition comprises a magnesium hydroxide in an amount of 40.0 to 55.0 wt%, preferably 42.5 to 53.5 wt%, more preferably 45.0 to 52.5 wt%, still more preferably 47.5 to 51.0 wt%, based on the total weight of the flame retardant polymer composition as component (D).

Component (D) preferably is a ground or precipitated magnesium hydroxide and more preferably is a ground magnesium hydroxide.

Precipitated magnesium hydroxides are in general more expensive than ground magnesium hydroxides, but precipitated magnesium hydroxide types are still dominating because due to their smaller particle size and more homogeneus particle size distribution they do not significantly deterioate the mechnical properties of the polymer matrix. The specific combination of components in the flame retardant polymer composition in the present invention allows to use also ground magnesium types for obtaining good mechanical properties.

In accordance with the present invention a "ground magnesium hydroxide" is a magnesium hydroxide obtained by grinding minerals based on magnesium hydroxide, such as brucite and the like. Brucite is found in its pure form or, more often, in combination with other minerals such as calcite, aragonite, talc or magnesite, often in stratified form between silicate deposits, for instance in serpentine asbestos, in chlorite or in schists.

The mineral containing magnesium hydroxide can be ground according to the following technique: Advantageously, the mineral as obtained from the mine is first crushed, then ground, preferably repeatedly, each crushing/grinding step being followed by a sieving step. The grinding can be effected under wet or dry conditions, for example by ball-milling, optionally in the presence of grinding coadjuvants, for example polyglycols or the like.

Suitable ground magnesium hydroxides which may be used as component (D) are commercially available, for example from Europiren B.V (Netherlands) under the tradename Ecopiren® 3.5C.

In a preferred embodiment component (D) is preferably used in the form of particles whose surface has been

treated with at least one saturated or unsaturated fatty acid containing from 8 to 24 carbon atoms, or a metal salt thereof, such as, for example: oleic acid, palmitic acid, stearic acid, isostearic acid, lauric acid; magnesium or zinc stearate or oleate; and the like. Component (D) may also be used without surface treatment.

Preferably component (D) is a ground magnesium hydroxide having a median particle size $d_{50}$ in the range of 1.0 to 10.0 μm, preferably in the range of 2.0 to 5.0 μm and still more preferably in the range of 3.0 to 4.0 μm.

Component (D) preferably is a ground magnesium hydroxide surface-treated with stearic acid. Thereby, the content of stearic acid is preferably 1.0 to 3.0 wt% and more preferably 1.5 to 2.5 wt% based on the weight of the ground magnesium hydroxide.

It is further preferred that component (D) is a ground or precipitated magnesium hydroxide having a BET surface area in the range of 1 to 20 $m^2/g$ and preferably in the range of 5 to 12 m2/g.

Component (E)

The flame retardant polymer composition comprises a copolymer of ethylene and alpha olefin comonomer units having from 4 to 10 carbon atoms, which has a density of from 860 to 910 $kg/m^3$, determined according to ISO 1183, in an amount of 2.0 to 15.0 wt%, preferably 3.0 to 14.0 wt%, more preferably 4.0 to 13.0 wt%, still more preferably 5.0 to 12.5 wt%, based on the total weight of the flame retardant polymer composition as component (E).

Component (E) is preferably a copolymer of ethylene and one or more alpha olefin comonomer units selected from 1-butene, 1-hexene and/or 1-octene.

Preferably component (E) is selected from a copolymer of ethylene and 1-butene, a copolymer of ethylene and 1-hexene and a copolymer of ethylene and 1-octene, more preferably from a copolymer of ethylene and 1-butene and a copolymer of ethylene and 1-octene.

It is especially preferred that component (E) is a copolymer of ethylene and 1-octene.

Component (E) has a density of from 860 to 910 $kg/m^3$, preferably from 870 to 905 $kg/m^3$, more preferably from 880 to 903 $kg/m^3$, determined according to ISO 1183.

Preferably component (E) has a melt flow rate $MFR_2$ is in the range of 0.1 to 10.0 g/10 min, more preferably in the range of from 0.5 to 5.0 g/10 min, still more preferably in the range of from 1.0 to 3.5 g/10 min, measured according to ISO 1133 (2.16 kg, 190°C).

Preferably component (E) is polymerized in the presence of a single site catalyst. Suitably component (E) is polymerized in a solution polymerization process as known in the art.

Copolymers of ethylene and alpha olefin comonomer units having from 4 to 10 carbon atoms, which have a density of from 860 to 910 $kg/m^3$ which may be used as component (E) are commercially available, for example from Borealis AG (Austria) under the tradenames Queo 8201 or Queo 8203.

Component (F)

The flame retardant polymer composition comprises a copolymer of ethylene and alpha olefin comonomer units having from 4 to 10 carbon atoms, which has a density of from 920 to 965 $kg/m^3$, determined according to ISO 1183, and a melt flow rate $MFR_5$ of from 0.05 to 2.50 g/10 min, determined according to ISO 1133 (5.0 kg, 190°C), in an amount of 18.0 to 35.0 wt%, preferably 20.0 to 32.5 wt%, more preferably 22.0 to 30.0 wt%, still more preferably 24.0 to 28.0 wt%, based on the total weight of the flame retardant polymer composition as component (F).

Component (F) is preferably a copolymer of ethylene and one or more alpha olefin comonomer units selected from 1-butene, 1-hexene and/or 1-octene.

Preferably component (F) is selected from a copolymer of ethylene and 1-butene, a copolymer of ethylene and 1-hexene and a copolymer of ethylene and 1-octene, more preferably from a copolymer of ethylene and 1-butene and a copolymer of ethylene and 1-hexene.

It is especially preferred that component (F) is a copolymer of ethylene and 1-hexene.

Component (F) has a density of from 920 to 965 $kg/m^3$, preferably from 930 to 963 $kg/m^3$, more preferably from 940 to 960 $kg/m^3$, determined according to ISO 1183.

In one embodiment component (F) is a natural resin of a copolymer of ethylene and alpha olefin comonomer units having from 4 to 10 carbon atoms, i.e. without carbon black.

In said embodiment component (F) preferably has a density of from 920 to 955 $kg/m^3$, preferably from 930 to 953 $kg/m^3$, more preferably from 940 to 950 $kg/m^3$, determined according to ISO 1183.

In another embodiment component (F) is a black resin of a copolymer of ethylene and alpha olefin comonomer units having from 4 to 10 carbon atoms, i.e. including carbon black in an amount of up to 5.0 wt%, preferably up to 3.5 wt%.

In said embodiment component (F) preferably has a density of from 930 to 965 $kg/m^3$, preferably from 940 to 963 $kg/m^3$, more preferably from 950 to 960 $kg/m^3$, determined according to ISO 1183.

Further, component (F) has a melt flow rate $MFR_5$ of from 0.05 to 2.50 g/10 min, preferably from 0.10 to 1.50

g/10 min, more preferably from 0.15 to 1.00 g/10 min, still more preferably from 0.20 to 0.50 g/10 min determined according to ISO 1133 (5.0 kg, 190°C).

Additionally, component (F) preferably has a melt flow rate $MFR_{21}$ of from 2.0 to 40.0 g/10 min, preferably from 3.0 to 30.0 g/10 min, more preferably from 4.0 to 20.0 g/10 min, still more preferably from 5.0 to 15.0 g/10 min determined according to ISO 1133 (21.6 kg, 190°C).

Component (F) is preferably a multimodal, more preferably a bimodal copolymer of ethylene and alpha olefin comonomer units having from 4 to 10 carbon atoms.

The term "multimodal" means herein, unless otherwise stated, multimodality with respect to molecular weight distribution and includes therefore a bimodal polymer. Usually, a polyethylene composition, comprising at least two polyethylene fractions, which have been produced under different polymerization conditions resulting in different (weight average) molecular weights and molecular weight distributions for the fractions, is referred to as "multimodal". The prefix "multi" relates to the number of different polymer fractions present in the polymer. Thus, for example, multimodal polymer includes so called "bimodal" polymer consisting of two fractions. The form of the molecular weight distribution curve, i.e. the appearance of the graph of the polymer weight fraction as a function of its molecular weight, of a multimodal polymer will show two or more maxima or is typically distinctly broadened in comparison with the curves for the individual fractions. For example, if a polymer is produced in a sequential multistage process, utilizing reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions form typically together a broadened molecular weight distribution curve for the total resulting polymer product.

For the preparation of component (F) polymerisation methods well known to the skilled person may be used. It is within the scope of the invention for a multimodal, e.g. at least bimodal, polymers to be produced by blending each of the components in-situ during the polymerisation process thereof (so called in-situ process) or, alternatively, by blending mechanically two or more separately produced components in a manner known in the art.

Ethylene copolymers useful in the present invention as component (F) are preferably obtained by in-situ blending in a multistage polymerisation process. Accordingly, polymers are obtained by in-situ blending in a multistage, i.e. two or more stage, polymerization process including solution, slurry and gas phase process, in any order. Whilst it is possible to use different polymerization catalysts in each stage of the process, it is preferred if the catalyst employed is the same in both stages.

Ideally therefore, the polyethylene polymer used in the blend of the invention are produced in at least two-stage polymerization using a single site catalyst or Ziegler Natta catalyst. Thus, for example two slurry reactors or two gas phase reactors, or any combinations thereof, in any order can be employed. Preferably however, the ethylene copolymer is made using a slurry polymerization in a loop reactor followed by a gas phase polymerization in a gas phase reactor.

A loop reactor - gas phase reactor system is well known as Borealis technology, i.e. as a BORSTAR™ reactor system. Such a multistage process is disclosed e.g. in EP517868.

The conditions used in such a process are well known. For slurry reactors, the reaction temperature will generally be in the range 60 to 110°C, e.g. 85 to 110°C, the reactor pressure will generally be in the range 5 to 80 bar, e.g. 50 to 65 bar, and the residence time will generally be in the range 0.3 to 5 hours, e.g. 0.5 to 2 hours. The diluent used will generally be an aliphatic hydrocarbon having a boiling point in the range -70 to +100°C, e.g. propane. In such reactors, polymerization may if desired be effected under supercritical conditions. Slurry polymerisation may also be carried out in bulk where the reaction medium is formed from the monomer being polymerised.

For gas phase reactors, the reaction temperature used will generally be in the range 60 to 115°C, e.g. 70 to 110°C, the reactor pressure will generally be in the range 10 to 25 bar, and the residence time will generally be 1 to 8 hours. The gas used will commonly be a nonreactive gas such as nitrogen or low boiling point hydrocarbons such as propane together with monomer, e.g. ethylene. Preferably, the first polymer fraction is produced in a continuously operating loop reactor where ethylene is polymerised in the presence of a polymerization catalyst as stated above and a chain transfer agent such as hydrogen. The diluent is typically an inert aliphatic hydrocarbon, preferably isobutane or propane. The reaction product is then transferred, preferably to continuously operating gas phase reactor. The second component can then be formed in a gas phase reactor using preferably the same catalyst.

Copolymers of ethylene and alpha olefin comonomer units having from 4 to 10 carbon atoms, which have a density of from 920 to 965 kg/$m^3$ and a melt flow rate $MFR_5$ of from 0.05 to 2.50 g/10 min, which may be used as component (F) are commercially available, for example from Borealis AG (Austria) under the tradenames Borsafe HE3490-LS-H or Borsafe HE3493-LS-H.

<u>Component (G)</u>

The flame retardant polymer composition optionally comprises carbon black in an amount of 0 to 8.0 wt%, preferably 0 to 7.5 wt%, more preferably 0 to 6.5 wt%, still more preferably 0 to 6.0 wt%, based on the total weight of

the flame retardant polymer composition as component (G).

Carbon black is preferably added to the flame retardant polymer composition as a carbon black masterbatch comprising 30 to 50 wt% carbon black in a polyethylene based matrix, based on the total weight amount of the carbon black masterbatch. When using a carbon black masterbatch the amount of carbon black in the flame retardant polymer composition includes the amount of the polyethylene based matrix.

The carbon black masterbatch preferably has a density of from 1100 to 1200 kg/m$^3$, preferably from 1115 to 1150 kg/m$^3$, determined according to ISO 1183.

In one embodiment the flame retardant flame retardant polymer composition does not comprise carbon black. In said embodiment the amount of component (G) in the flame retardant polymer composition is 0 wt% and component (F) is a natural resin of a copolymer of ethylene and alpha olefin comonomer units having from 4 to 10 carbon atoms having a density of from 920 to 955 kg/m$^3$, preferably from 930 to 953 kg/m$^3$, more preferably from 940 to 950 kg/m$^3$, determined according to ISO 1183.

In a second embodiment the flame retardant flame retardant polymer composition comprises carbon black in form of component (G). In said embodiment the amount of component (G) in the flame retardant polymer composition is 0.5 to 8.0 wt%, 1.0 to 7.5 wt%, preferably 1.5 to 6.5 wt% more preferably 2.0 to 6.0 wt%, based on the total weight of the flame retardant polymer composition and component (F) is a natural resin of a copolymer of ethylene and alpha olefin comonomer units having from 4 to 10 carbon atoms having a density of from 920 to 955 kg/m$^3$, preferably from 930 to 953 kg/m$^3$, more preferably from 940 to 950 kg/m$^3$, determined according to ISO 1183.

In a third embodiment the flame retardant flame retardant polymer composition comprises carbon black in form of a black resin of ethylene copolymer as component (F). In said embodiment the amount of component (G) in the flame retardant polymer composition is 0 wt% and component (F) is a black resin of a copolymer of ethylene and alpha olefin comonomer units having from 4 to 10 carbon atoms having a density of from 930 to 965 kg/m$^3$, preferably from 940 to 963 kg/m$^3$, more preferably from 950 to 960 kg/m$^3$, determined according to ISO 1183.

Carbon black masterbatches suitable as component (G) in the present invention, which may be used as component (F) are commercially available, for example from Borealis AG (Austria) under the tradenames Borlink LE7710.

Additives

The flame retardant polymer composition according to the present invention may also comprise additives.

According to a preferred embodiment of the present invention the polymer composition comprises at least one additive preferably selected from the group consisting of slip agents, UV-stabilisers, antioxidants, additive carriers, nucleating agents, mica, scorch retarder and mixtures thereof.

The additives preferably are present in an amount of 0 to 5.0 wt%, preferably 0.05 to 2.5 wt%, more preferably from 0.10 to 1.5 wt%, still more preferably from 0.15 to 1.0 wt%, based on the total weight of the flame retardant polymer composition.

The flame retardant polymer composition preferably comprises an antioxidant comprising a sterically hindered phenol group or aliphatic sulphur groups. Such compounds are disclosed in EP 1 254 923 A1 as particularly suitable antioxidants for stabilisation of polyolefin containing hydrolysable silane groups.

Other preferred antioxidants are disclosed in WO 2005/003199 A1. Preferably, the antioxidant is present in the composition in an amount of from 0.01 to 3 wt%, more preferably 0.05 to 2 wt%, and most preferably 0.08 to 1.5 wt%, based on the total weight of the flame retardant polymer composition.

In case that the flame retardant polymer composition of the present invention is crosslinked, it may comprise a scorch retarder. The scorch retarder may be a silane containing scorch retarder as described in EP 0 449 939 A1 .If applicable, the scorch retarder may be present in the flame retardant polymer composition in an amount from 0.3 wt% to 5.0 wt% based on the total weight of the flame retardant polymer composition.

Flame retardant polymer composition

The flame retardant polymer composition comprises components (A) to (F) and optionally component (G) and additives in amounts as described above.

Preferably the flame retardant polymer composition comprises, more preferably consists of 3.0 to 14.0 wt%, preferably 4.0 to 13.0 wt%, more preferably 5.5 to 12.5 wt% of component (A);

0.5 to 3.5 wt%, preferably 1.0 to 3.0 wt%, more preferably 1.5 to 2.5 wt% of component (B);
0.3 to 2.8 wt%, preferably 0.5 to 2.5 wt%, more preferably 0.7 to 2.3 wt% of component (C);
42.5 to 53.5 wt%, preferably 45.0 to 52.5 wt%, more preferably 47.5 to 51.0 wt% of component (D);
3.0 to 14.0 wt% preferably 4.0 to 13.0 wt%, more preferably 5.0 to 12.5 wt% of component (E);
20.0 to 32.5 wt%, preferably 22.0 to 30.0 wt% more preferably 24.0 to 28.0 wt% of component (F);

0 to 7.5 wt%, preferably 0 to 6.5 wt% more preferably 0 to 6.0 wt% of a carbon black masterbatch comprising 30 to 50 wt% carbon black in a polyethylene based matrix, based on the total weight amount of the carbon black masterbatch; and

0.05 to 2.5 wt%, preferably from 0.10 to 1.5 wt%, more preferably from 0.15 to 1.0 wt% of additives selected from the group consisting of slip agents, UV-stabiliser, antioxidants, additive carriers, nucleating agents, mica and mixtures thereof,

wherein all weight percentages are based on the total weight of the flame retardant polymer composition.

According to a preferred embodiment in accordance with the present invention the flame retardant polymer composition is not containing calcium borate and zinc borate, it is further preferred that the flame retardant polymer composition is free of any metal borates.

Still another preferred embodiment of the present invention stipulates that the flame retardant polymer composition is free of inorganic hypophosites.

The flame retardant polymer composition preferably has a tensile strength of from 12.5 MPa to 25.0 MPa, preferably from 13.0 to 22.5 MPa, more preferably from 13.5 to 21.0 MPa, still more preferably from 14.0 to 20.0 MPa, determined according to ISO 527-1 and ISO 527-2.

After conditioning of the test specimens for 240 h at 110°C the flame retardant polymer composition preferably has a tensile strength of from 12.5 MPa to 25.0 MPa, preferably from 3.0 to 22.5 MPa, more preferably from 13.5 to 21.0 MPa, still more preferably from 14.0 to 20.0 MPa, determined according to ISO 527-1 and ISO 527-2.

It is preferred that the flame retardant polymer composition preferably shows a change of tensile strength, as the ratio of the tensile strength before conditioning to the tensile strength after conditioning of from -5.0% to +5.0%, preferably from -3.5% to +3.5%.

The flame retardant polymer composition preferably has an elongation at break of from 350% to 550%, preferably from 370% to 525%, more preferably from 390% to 500%, still more preferably from 400% to 480%, determined according to ISO 527-1 and ISO 527-2.

After conditioning of the test specimens for 240 h at 110°C the flame retardant polymer composition preferably has an elongation at break of from 300% to 500%, preferably from 310% to 475%, more preferably from 315% to 450%, still more preferably from 320% to 430%, determined according to ISO 527-1 and ISO 527-2.

It is preferred that the flame retardant polymer composition preferably shows a change of elongation at break, as the ratio of the elongation at break before conditioning to the elongation at break after conditioning of from 0% to 20.0%, preferably from 5.0% to 15.0%.

Further, the flame retardant polymer composition preferably has a tear strength at 23°C of from 8.5 to 25.0 N/mm, more preferably from 10.0 to 22.5 N/mm, still more preferably from 11.0 to 20.0 N/mm, determined according to BS 6469 section 99.1:1992, HD 605 S2:2008 Clause 2.2.2.2 Method 2 at a temperature of 23°C.

Still further, the flame retardant polymer composition preferably has a tear strength at 50°C of from 8.5 to 20.0 N/mm, more preferably from 9.0 to 17.5 N/mm, still more preferably from 10.0 to 15.0 N/mm, determined according to BS 6469 section 99.1:1992, HD 605 S2:2008 Clause 2.2.2.2 Method 2 at a temperature of 50°C.

The flame retardant polymer composition preferably has a peak heat release rate (pHRR) of from 75 to 250 $kW/m^2$, more preferably 75 to 230 $kW/m^2$, still more preferably 75 to 210 $kW/m^2$, determined in a cone calorimeter test according to ISO 5660-1.

Further, the flame retardant polymer composition preferably has a total smoke production (TSP) from 0.3 to 7.5 $m^2$, preferably from 0.5 to 6.5 $m^2$, still more preferably from 0.7 to 5.5 $m^2$, determined in a cone calorimeter test according to ISO 5660-1.

The flame retardant polymer composition according to the invention thus shows good flame retardant properties together with improved mechanical properties as to tensile strength, elongation at break and tear strength and preferably meets the requirements of the ST12 jacket described in IEC 60840:2020 "Power cables with extruded insulation and their accessories for rated voltages above 30 kV (Um= 36 kV) up to 150 kV (Um = 170 kV) - Test methods and requirements" (Um = maximum permitted voltage).

## Article

The present invention further relates to an article comprising the flame retardant polymer composition as described above or below in all its aspects and embodiments.

The article is preferably a wire or cable which comprises at least one layer comprising the flame retardant polymer composition.

According to a preferred embodiment of the present invention the at least one layer obtained from the polyolefin composition of the present invention may be cross-linked.

The wire or cable may be produced by co-extrusion of the different layers onto the conducting core. Then,

crosslinking is optionally performed, preferably by moisture curing in case that component (A) comprises comonomer units comprising a crosslinkable silane group, wherein the silane groups are hydrolyzed under the influence of water or steam. Moisture curing is preferably performed in a sauna or water bath at temperatures of 70 to 100°C or at ambient conditions.

The flame retardant polymer composition in accordance with the present invention can be extruded around a wire or cable to form an insulating or jacketing layer or can be used as bedding compounds.

The flame retardant polymer composition is then optionally crosslinked.

According to a preferred embodiment the wire or cable comprises an insulation layer, preferably comprising or consisting of a material selected from the group consisting of crosslinked or thermoplastic polyethylene, thermoplastic polypropylene or flame retardant polyolefins. Suitable flame retardant polyolefins are inter alia described in WO 2013/159942 A2. Suited thermoplastic insulations are for example disclosed in WO 2007/137711 A1 or WO 2013/1599442 A2 and are commercially available for example from Borealis AG (Austria) under the tradenames FR4802, FR4803, FR4807, FR6082, FR6083 and FR4804. Commercially available crosslinkable insulation materials are also available from Borealis AG (Austria) under the tradenames FR4450 and FR4451.

An insulation layer of a low voltage power cable may have a thickness in the range of 0.4 mm to 3.0 mm, preferably below 2.0 mm, depending on the application. Preferably, the insulation is directly coated onto the electric conductor.

In a preferred embodiment the flame retardant polymer composition according to the invention is comprised in the jacketing layer of a wire or cable, preferably in the jacketing layer of medium voltage (MW) or high voltage (HV) cable.

MW and HV cables generally have a conductor, which is surrounded by an inner semiconductive layer, followed by an insulation layer, then an outer semiconducutive layer and a jacketing layer as protective outer layer. MW and HV cables mainly differ in the thickness of the insulation layer.

MW cables are usually classified for a maximum permitted voltage Um of 1 kV to 36 kV. HW cables are usually classified for a maximum permitted voltage Um of 36 kV to 230 kV.

All preferred aspects and embodiments of the flame retardant polymer composition as described above shall also hold for the article according to the present invention.

Use

Still further, the present invention relates to the use of the flame retardant polymer composition as described above or below for the production of an article, such as in a flame retardant layer of a wire or cable.

All preferred aspects and embodiments of the flame retardant polymer composition and the article as described above shall also hold for the article according to the present invention.

## Experimental Part

a) Measuring methods

The following definitions of terms and determination methods apply for the above general description of the invention as well as to the below examples unless otherwise defined.

### Melt Flow Rate (MFR)

The MFR was measured according to ISO 1133 (Davenport R-1293 from Daventest Ltd). MFR values were measured at three different loads 2.16 kg ($MFR_2$), 5.0 kg ($MFR_5$) and 21.6 kg ($MFR_{21}$) at a temperature of 190°C for polyethylenes.

For polypropylenes the melt flow rate is measured at the same loads at a temperature of 230°C.

### Density

The density was measured according to ISO 1183-1 - method A (2019). Sample preparation was done by compression moulding in accordance With ISO 1872-2:2007.

### Comonomer content in component (A)

Quantification of microstructure by NMR spectroscopy

Quantitative nuclear-magnetic resonance (NMR) spectroscopy was used to quantify the comonomer content

of the polymer.

Quantitative $^{1}H$ NMR spectra recorded in the molten-state using a Bruker Avance III 500 NMR spectrometer operating at 500.13 MHZ. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed using a recycle delay of 2s {pollard04, klimke06}. A total of 16 transients were acquired per spectra.

Quantitative $^{1}H$ NMR spectra were processed, integrated and quantitative properties determined using custom spectral analysis automation programs. All chemical shifts were internally referenced to the bulk ethylene methylene signal at 1.33 ppm.

Assignment for methylacrylate (MA) incorporation {brandolini01}:

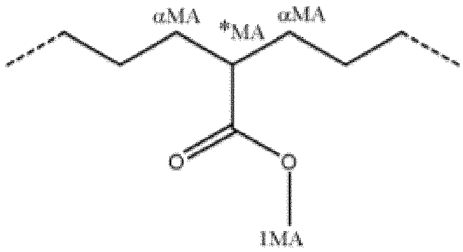

Characteristic signals resulting from incorporation of methyl acrylate, in possible various comonomer sequences, were observed. The overall methylacrylate incorporation was quantified using the integral of the signal at 3.6 ppm assigned to the 1MA site, accounting for the number of reporting nuclei per comonomer:

$$MA = I_{1MA} / 3$$

The ethylene content was quantified using the integral of the bulk aliphatic ($I_{bulk}$) signal between 0.00 - 3.00 ppm. The total ethylene content was calculated based on the bulk integral and compensating for the observed comonomer:

$$E = (1/4)*[ I_{bulk} - 3*MA]$$

The total mole fractions of methylacrylate in the polymer was calculated as:

$$fMA = MA / (E + MA)$$

The total comonomer incorporations of methylacrylate in mole percent was calculated from the mole fraction in the standard manner:

$$MA [mol\%] = 100 * fMA$$

The total comonomer incorporations of methylacrylate in weight percent was calculated from the mole fractions in the standard manner:

$$MA [wt\%] = 100 * (fMA * 86.09) / ( (fMA * 86.09) + ((1-fMA) * 28.05) )$$


| | |
|---|---|
| klimke06 | Klimke, K., Parkinson, M., Piel, C., Kaminsky, W., Spiess, H.W., Vlfilhelm, M., Macromol. Chem. Phys. 2006;207:382. |
| parkinson07 | Parkinson, M., Klimke, K., Spiess, H.W., V\filhelm, M., Macromol. Chem. Phys. 2007;208:2128. |

(continued)


| | |
|---|---|
| pollard04 | Pollard, M., Klimke, K., Graf, R., Spiess, H.W., V\filhelm, M., Sperber, O., Piel, C., Kaminsky, W., Macromolecules 2004;37:813. |
| castignolle309 | Castignolles, P., Graf, R., Parkinson, M., V\filhelm, M., Gaborieau, M., Polymer 50 (2009) 2373. |
| brandolini01 | A.J. Brandolini, DD. Hills, "NMR spectra of polymers and polymer additives", Marcel Deker Inc., 2000. |


**Median Particle Size ($d_{50}$)**

Median particle size of metal hydroxide can be measured by laser diffraction (ISO13320), dynamic light scattering (ISO 22412) or sieve analysis (ASTM D 1921-06). For the metal hydroxides used in the working examples, the determination of the median particle size $d_{50}$ was conducted by laser diffraction. Any limitation of the claims shall refer to values obtained from laser diffraction (ISO 13320).

**BET surface**

The BET surface is determined in accordance with ISO 9277 (2010).

**Manufacturing of tape used for determination of tensile strength and elongation at break**

For determining the tensile strength and elongation at break, tapes (1.8 mm) were produced on a Collin Teach-Line E20T tape extruder with a 4.2:1, 20D compression screw with a 20 mm diameter. The temperature profile was 150/160/170°C and the screw speed was 55 rpm.

**Tensile Testing**

Tensile testing was executed in accordance with ISO 527-1 and ISO 527-2 using an Alwetron TCT 10 tensile tester. Ten test specimens were punched from a plaque using ISO 527-2/5A specimen and placed in a climate room with relative humidity of 50 $\pm$ 5 % at a temperature of 23°C for at least 16 hours before the test.

For conditioning ten test specimens were additionally placed in a climate room with at a temperature of 110°C for at least 240 hours before the test.

The test specimen were placed vertically between clamps with a distance of 50 $\pm$ 2 mm, extensometer clamps with a distance of 20 mm and a load cell of 1 kN. Before the test was carried out, the exact width and thickness for every sample was measured and recorded. Each sample rod was tensile tested with a constant speed of 50 mm/min until breakage and at least 6 approved parallels were performed. In highly filled systems, there is generally a big variation of the results and therefore the median value was used to extract a single value for elongation at break (%) and tensile strength (MPa).

**Tear resistance (determined as Elmendorf tear (N)):**

Tear resistance was measured according to BS6469, section 99.1:1992, HD 605 S2:2008 Clause 2.2.2.2 Method 2.

The method is describing how the tear resistance is measured in sheathing materials, on 1 mm thick cable samples or compression moulded plaques. A test piece with a cut is used to measure the tear force by means of a tensile machine at 500 mm/min and a distance between the tensile testing clamps of 50 mm. The tear resistance is calculated by dividing the maximum force needed to tear the sample by its thickness.

**Compression Moulding**

Plaques were prepared for the limiting oxygen index and vertical burning tests with compression moulding (Collin R 1358, edition: 2/060510) according to ISO 293. The pellets were pressed in between two Mylar film sheets and positioned in a specific frame with the correct shape and dimensions (3x100x100 mm). The samples were pressed by applying 20 bar for a minute at 170°C, followed by 200 bars pressure for 5 minutes at the same temperature. The remaining compression was done at the same high pressure for 9 minutes at a cooling rate of 15°C/min. The amount of pellets used for each plaque was calculated using the density of the material with an excess of 10 wt%.

**Flame retardancy**

Flame retardancy was measured as peak heat release rate (pHRR) and total smoke production (TSP) in a cone calorimeter test according to ISO 5660-1.
A cone calorimeter is a device used to study the fire behavior of small samples of various materials in condensed phase. It is widely used in the field of Fire Safety Engineering. It gathers data regarding the ignition time, mass loss, combustion products, heat release rate and other parameters associated with its burning properties. Device usually allows the fuel sample to be exposed to different heat fluxes over its surface. The principle for the measurement of the heat release rate is based on that the gross heat of combustion of any organic material is directly related to the amount of oxygen required for combustion.
Samples of 3x100x100 mm were prepared by compression moulding. Cone testing was then performed with a constant heat flux of 35 $kW/m^2$ and a distance between sample and cone heater of 60 mm. Peak heat release is the maximum heat release during the cone fire test. Production of dark smoke is measured by a laser in the cone duct.

b) Materials used

**Component (A)**

"EMA" is a copolymer of ethylene and methyl acrylate (weight ratio = 75:25) having a $MFR_2$ of 0.4 g/10 min and a density of 944 $kg/m^3$, commercially available from DuPont (USA) under the name Elvaloy® AC 1125.

**Component (B)**

"LLDPE-MAH" is a linear low density polyethylene grafted with maleic acid anhydride (maleic acid anhydride content = 0.5 to 1.0 wt%, $MFR_2$ = 2.0 g/10 min, density = 930 $kg/m^3$), commercially available from HDC Hyundai EP Co., Ltd. under the tradename Polyglue® GE300C.

**Component (C)**

"OMS-1" is a masterbatch containing 50 wt% of an organo modified siloxane in a LDPE matrix, commercially available from Evonik Nutrition & Care GmbH (Germany) as Tegomer® 6264.
"OMS-2" is pure liquid organo modified siloxane (same as in OMS-1), commercially available from Evonik Nutrition & Care GmbH (Germany) as Tegomer® V-Si-4042.

**Component (D)**

"MDH-1" is a brucite (ground magnesium hydroxide) (Ecopiren® 3.5C) produced and commercially available by Europiren B.V (Netherlands) having a $d_{50}$ of 3.5 μm, a specific surface area in the range of 7 to 10 $m^2/g$ and is coated with 2 wt% of stearic acid.
The chemical composition is: $Mg(OH)_2$ > 92.8 wt%, CaO < 2.3 wt%, $SiO_2$ < 1.3 wt% and $Fe_2O_3$ < 0.13 wt%.

**Component (E)**

"VLDPE" is a very low density copolymer of ethylene and 1-octene having a density of 883 $kg/m^3$ and a $MFR_2$ of 1.1 g/10 min, commercially available as Queo 8201 from Borealis AG (Austria).

**Component (F)**

"HDPE-1" is a natural high density copolymer of ethylene and 1-hexene having a density of 949 $kg/m^3$ and a $MFR_5$ of 0.23 g/10 min, commercially available as HE3493-LS-H from Borealis AG (Austria).
"HDPE-2" is a natural high density copolymer of ethylene and 1-butene having a density of 944 $kg/m^3$, a $MFR_2$ of 1.7 g/10 min and a $MFR_5$ of 5.1 g/10 min, commercially available as HE6068 from Borealis AG (Austria). HDPE-2 has a higher $MFR_5$ than claimed and therefore is considered as a component comparative to component (F)

**Component (G)**

"CBMB" is a thermoplastic black polyethylene compound having a density of 1135 $kg/m^3$ used as carbon black master batch, commercially available as Borlink LE7710 from Borealis AG (Austria).

**Further components**

"AO" is a high molecular weight sterically hindered phenolic antioxidant, commercially available from BASF SE as Irganox 1010.

"UV" is synergistic mixture of Chimassorb 944 and Tinuvin 622 and used as a light stabilizer, commercially available from BASF SE as Tinuvin 783 FDL.

c) Preparation of the flame retardant polymer compositions

The polymer compositions according to the inventive examples (IE1 to IE3) and for comparative examples (CE1 to CE6) were produced by mixing the components together in a BUSS-co-kneader (46 mm) at a screw speed of 225 rpm and at a set temperature of 180°C in zone 1 and 160°C in zone 2. The mixer screw was heated to 120°C. The extruder screw temperature was 160°C, the barrel heated to 170°C and the speed 4 rpm. All components were added in port 1. The amounts of the different components in the polymer compositions and the properties of the polymer compositions according to the inventive examples and the comparative examples are listed below in Table 1. The properties of the examples are also shown in Table 1.

It can be seen that comparative example CE6, which reflects example IE2 of WO 2021/111006 A1 shows inferior mechanical properties compared to the inventive examples IE 1-IE3 .

Comparative example CE5, which differs in using a lower amount of a different component (F), not falling under the scope of the invention, shows inferior mechanical properties and poor pHRR flame retardancy properties compared to the inventive examples IE1-IE3. Comparative examples CE1-CE4, which differ from the inventive examples in a lower amount of component (F), all show lower tear strength, especially at 50°C, and a higher change in mechanical properties, especially in elongation at break, after conditioning compared to the inventive examples IE1-IE3.

Table 1: Composition and properties of the examples

| | IE1 | IE2 | IE3 | CE1 | CE2 | CE4 | CE4 | CE5 | CE6 |
|---|---|---|---|---|---|---|---|---|---|
| **Components** | | | | | | | | | |
| EMA (A) [wt%] | 6.0 | 12.0 | 7.0 | 16.0 | 14.0 | 12.0 | 12.0 | 11.5 | 21.65 |
| LLDPE-MAH (B) [wt%] | 2.0 | 2.0 | 2.0 | 2.0 | 2.0 | 2.0 | 2.0 | 4.0 | 4.0 |
| OMS (C) [wt%] | 2.0 | 2.0 | - | 2.0 | 2.0 | 2.0 | 2.0 | 2.0 | 3.0 |
| OMS-2 (C) [wt%] | - | - | 1.0 | - | - | - | - | - | - |
| MDH (D) [wt%] | 50.0 | 50.0 | 50.0 | 50.0 | 52.0 | 54.0 | 56.0 | 55.0 | 63.0 |
| VLDPE (E) [wt%] | 12.0 | 6.0 | 9.95 | 12.0 | 12.0 | 12.0 | 12.0 | 11.5 | 8.0 |
| HDPE-1 (F) [wt%] | 27.5 | 27.5 | 24.55 | 17.5 | 17.5 | 17.5 | 15.5 | - | - |
| HDPE-2 (F-comp) [wt%] | - | - | - | - | - | - | - | 15.0 | - |
| CBMB (G) [wt%] | - | - | 5.3 | - | - | - | - | - | - |
| AO [wt%] | 0.2 | 0.2 | 0.2 | 0.2 | 0.2 | 0.2 | 0.2 | 0.2 | 0.2 |
| UV [wt%] | 0.3 | 0.3 | - | 0.3 | 0.3 | 0.3 | 0.3 | 0.3 | 0.15 |
| **Properties** | | | | | | | | | |
| Tensile strength [MPa] | 17.7 | 16.7 | 15.7 | 16.3 | 15.8 | 15.2 | 14.5 | 11.6 | 10.7 |
| Elongation at break [%] | 471.6 | 438.0 | 442.0 | 486.8 | 483.5 | 442.3 | 404.2 | 306.0 | 173.0 |
| Tensile strength, 110°C, 240h [MPa] | 17.6 | 17.2 | 15.2 | 15.6 | 15.9 | 15.4 | 14.9 | | 8.6 (10d, 100°C) |
| Elongation at break, 110°C, 240 h [%] | 407.7 | 398.9 | 388.9 | 392.4 | 382.4 | 365.4 | 315.9 | | 134.4 (10d, 100°C) |
| Change in tensile strength [%] | 0.7 | -3.0 | 3.2 | 4.4 | -0.4 | -1.6 | -3.3 | | 20 |

(continued)

| Properties | | | | | | | | | |
|---|---|---|---|---|---|---|---|---|---|
| Change in elongation at break [%] | 14 | 9 | 12 | 19 | 21 | 17 | 22 | | 23 |
| Tear strength, 23°C [N/mm] | 13.4 | 12.2 | 18.0 | 12.3 | 11.8 | 12.3 | 11.9 | 7.5 | ~4 |
| Tear strength, 50°C [N/mm] | 11.6 | 10.9 | 11.4 | 7.9 | 8.0 | 8.4 | 7.4 | | ~2 |
| Flame retardancy, pHRR [$kW/m^2$] | 200 | 172.5 | 165 | 152.5 | 147.5 | 154.5 | 151.0 | 273.0 | ~90 |
| Flame retardancy, TSP [$m^2$] | 4.2 | 5.0 | 0.9 | 5.2 | 4.5 | 3.3 | 2.8 | 4.9 | 0.5 |

## Claims

**1.** A flame retardant polymer composition comprising

(A) 2.0 to 15.0 wt% of a copolymer of ethylene comprising units selected from the group consisting of methyl acrylate, methyl methacrylate or mixtures thereof;
(B) 0 to 4.0 wt% of a polyethylene and/or polypropylene containing units originating from maleic acid anhydride;
(C) 0.1 to 3.0 wt% of a silicon fluid and/or silicone gum;
(D) 40.0 to 55.0 wt% of a magnesium hydroxide;
(E) 2.0 to 15.0 wt% of a copolymer of ethylene and alpha olefin comonomer units having from 4 to 10 carbon atoms, which has a density of from 860 to 910 $kg/m^3$, determined according to ISO 1183;
(F) 18.0 to 35.0 wt% of a copolymer of ethylene and alpha olefin comonomer units having from 4 to 10 carbon atoms, which has a density of from 920 to 965 $kg/m^3$, determined according to ISO 1183, and a melt flow rate $MFR_5$ of from 0.05 to 2.50 g/10 min, determined according to ISO 1133 at a temperature of 190°C and a load of 5.0 kg; and
(G) 0 to 8.0 wt% of carbon black,

wherein all weight percentages are based on the total weight of the flame retardant polymer composition.

**2.** The flame retardant polymer composition according to claim 1, wherein component (A) has a density in the range of from 920 to 960 $kg/m^3$, preferably in the range of from 935 to 950 $kg/m^3$, determined according to ISO 1183 and/or a melt flow rate $MFR_2$ in the range of from 0.1 to 10 g/10 min, preferably in the range of 0.1 to 5.0 g/10 min, more preferably in the range of from 0.2 to 0.7 g/10 min, determined according to ISO 1133 at a temperature of 190°C and a load of 2.16 kg.

**3.** The flame retardant polymer composition according to claims 1 or 2, wherein component (A) further comprises units with hydrolysable silane groups, wherein the units with hydrolysable silane groups are preferably represented by formula (I)

$$R^1SiR^2_qY_{3-q} \qquad (I)$$

wherein

$R^1$ is an ethylenically unsaturated hydrocarbyl, hydrocarbyloxy or (meth)acryloxy hydrocarbyl group,
each $R^2$ is independently an aliphatic saturated hydrocarbyl group,
Y which may be the same or different, is a hydrolysable organic group and
q is 0, 1 or 2, wherein the amount of units with hydrolysable silane groups is preferably in the range of from 0.2 to 4.0 wt%, more preferably in the range of from 0.4 to 2.0 wt%, based on the total weight of component (A).

**4.** The flame retardant polymer composition according to any one of the preceding claims, wherein component (B) has a density in the range of from 910 to 950 $kg/m^3$, preferably in the range of from 920 to 940 $kg/m^3$, determined according to ISO 1183 and/or a melt flow rate $MFR_2$ in the range of from 0.5 to 5.0 g/10 min, preferably in the range of from 1.5 to 2.5 g/10 min, determined according to ISO 1133 at a temperature of 190°C for polyethylene or 230°C

for polypropylene and a load of 2.16 kg.

5. The flame retardant polymer composition according to any one of the preceding claims, wherein component (C) is a silicone fluid or silicone gum selected from the group consisting of polysiloxane, preferably polydimethylsiloxane, and siloxanes containing alkoxy or alkyl functional groups and mixtures thereof, preferably component (C) is an organomodified siloxane.

6. The flame retardant polymer composition according to any one of the preceding claims, wherein component (D) is a ground or precipitate magnesium hydroxide, preferably a ground magnesium hydroxide, more preferably component (D) is a ground magnesium hydroxide, which is surface-treated with stearic acid.

7. The flame retardant polymer composition according to any one of the preceding claims, wherein component (E) is a copolymer of ethylene and 1-octene.

8. The flame retardant polymer composition according to any one of the preceding claims, wherein component (F) is a copolymer of ethylene and 1-hexene.

9. The flame retardant polymer composition according to any one of the preceding claims comprising, preferably consisting of

3.0 to 14.0 wt%, preferably 4.0 to 13.0 wt%, more preferably 5.5 to 12.5 wt% of component (A);
0.5 to 3.5 wt%, preferably 1.0 to 3.0 wt%, more preferably 1.5 to 2.5 wt% of component (B);
0.3 to 2.8 wt%, preferably 0.5 to 2.5 wt%, more preferably 0.7 to 2.3 wt% of component (C);
42.5 to 53.5 wt%, preferably 45.0 to 52.5 wt%, more preferably 47.5 to 51.0 wt% of component (D);
3.0 to 14.0 wt% preferably 4.0 to 13.0 wt%, more preferably 5.0 to 12.5 wt% of component (E);
20.0 to 32.5 wt%, preferably 22.0 to 30.0 wt% more preferably 24.0 to 28.0 wt% of component (F);
0 to 7.5 wt%, preferably 0 to 6.5 wt% more preferably 0 to 6.0 wt% of a carbon black masterbatch comprising 30 to 50 wt% carbon black (G) in a polyethylene based matrix, based on the total weight amount of the carbon black masterbatch; and
0.05 to 2.5 wt%, preferably from 0.10 to 1.5 wt%, more preferably from 0.15 to 1.0 wt% of additives selected from the group consisting of slip agents, UV-stabiliser, antioxidants, additive carriers, nucleating agents, mica, scorch retarder and mixtures thereof, wherein all weight percentages are based on the total weight of the flame retardant polymer composition.

10. The flame retardant polymer composition according to any one of the preceding claims having one or more, preferably all of the following properties:

• a tensile strength of from 12.5 MPa to 25.0 MPa, preferably from 13.0 to 22.5 MPa, more preferably from 13.5 to 21.0 MPa, still more preferably from 14.0 to 20.0 MPa, determined according to ISO 527-1 and ISO 527-2;
• a tensile strength of from 12.5 MPa to 25.0 MPa, preferably from 13.0 to 22.5 MPa, more preferably from 13.5 to 21.0 MPa, still more preferably from 14.0 to 20.0 MPa, determined after conditioning of the test specimens for 240 h at 110°C according to ISO 527-1 and ISO 527-2
• a change of tensile strength, as the ratio of the tensile strength before conditioning to the tensile strength after conditioning of from -5.0% to +5.0%, preferably from -3.5% to +3.5%;
• an elongation at break of from 350% to 550%, preferably from 370% to 525%, more preferably from 390% to 500%, still more preferably from 400% to 480%, determined according to ISO 527-1 and ISO 527-2;
• an elongation at break of from 300% to 500%, preferably from 310% to 475%, more preferably from 315% to 450%, still more preferably from 320% to 430%, determined after conditioning of the test specimens for 240 h at 110°C according to ISO 527-1 and ISO 527-2;
• a change of elongation at break, as the ratio of the elongation at break before conditioning to the elongation at break after conditioning of from 0% to 20.0%, preferably from 5.0% to 15.0%;
• a tear strength at 23°C of from 8.5 to 25.0 N/mm, more preferably from 10.0 to 22.5 N/mm, still more preferably from 11.0 to 20.0 N/mm, determined according to BS 6469 section 99.1:1992, HD 605 S2:2008 Clause 2.2.2.2 Method 2 at a temperature of 23°C; and/or
• a tear strength at 50°C of from 8.5 to 20.0 N/mm, more preferably from 9.0 to 17.5 N/mm, still more preferably from 10.0 to 15.0 N/mm, determined according to BS 6469 section 99.1:1992, HD 605 S2:2008 Clause 2.2.2.2 Method 2 at a temperature of 50°C.

**11.** The flame retardant polymer composition according to any one of the preceding claims having one or more, preferably all of the following properties:

- a peak heat release rate (pHRR) of from 75 to 250 kW/$m^2$, more preferably 75 to 230 kW/$m^2$, still more preferably 75 to 210 kW/$m^2$, determined in a cone calorimeter test according to ISO 5660-1; and/or
- a total smoke production (TSP) from 0.3 to 7.5 $m^2$, preferably from 0.5 to 6.5 $m^2$, still more preferably from 0.7 to 5.5 $m^2$, determined in a cone calorimeter test according to ISO 5660-1.

**12.** An article comprising the flame retardant polymer composition according to any one of the preceding claims.

**13.** The article according to claim 12 being a wire or cable comprising at least one layer comprising said flame retardant polymer composition according to any one of claims 1 to 11, preferably a high voltage cable comprising at least one layer comprising said flame retardant polymer composition according to any one of claims 1 to 11.

**14.** The article according to claim 13, wherein the layer is a jacketing layer.

**15.** Use of a flame retardant polymer composition according to any one of claims 1 to 11 in a flame retardant layer of a wire or cable.

**Patentansprüche**

**1.** Flammhemmende Polymerzusammensetzung, umfassend

(A) 2,0 bis 15,0 Gew.-% eines Copolymers von Ethylen, das Einheiten umfasst, die aus der Gruppe ausgewählt sind, die aus Methylacrylat, Methylmethacrylat oder Mischungen davon besteht;
(B) 0 bis 4,0 Gew.-% eines Polyethylens und/oder Polypropylens, das Einheiten enthält, die von Maleinsäureanhydrid stammen;
(C) 0,1 bis 3,0 Gew.-% einer Silikonflüssigkeit und/oder eines Silikongummis;
(D) 40,0 bis 55,0 Gew.-% eines Magnesiumhydroxids;
(E) 2,0 bis 15,0 Gew.-% eines Copolymers aus Ethylen und alpha-Olefin-Comonomereinheiten mit 4 bis 10 Kohlenstoffatomen, das eine Dichte von 860 bis 910 kg/$m^3$, bestimmt nach ISO 1183, aufweist;
(F) 18,0 bis 35,0 Gew.-% eines Copolymers aus Ethylen und alpha-Olefin-Comonomereinheiten mit 4 bis 10 Kohlenstoffatomen, das eine Dichte von 920 bis 965 kg/$m^3$, bestimmt nach ISO 1183, und eine Schmelzflußrate $MFR_5$ von 0,05 bis 2,50 g/10 min, bestimmt nach ISO 1133, bei einer Temperatur von 190°C und einer Ladung von 5,0 kg aufweist; und
(G) 0 bis 8,0 Gew.-% Ruß,

wobei sich alle Gewichtsprozente auf das Gesamtgewicht der flammhemmenden Polymerzusammensetzung beziehen.

**2.** Flammhemmende Polymerzusammensetzung nach Anspruch 1, wobei die Komponente (A) eine Dichte im Bereich von 920 bis 960 kg/$m^3$, vorzugsweise im Bereich von 935 bis 950 kg/$m^3$, bestimmt nach ISO 1183, und/oder eine Schmelzflussrate $MFR_2$ im Bereich von 0,1 bis 10 g/10 min, vorzugsweise im Bereich von 0,1 bis 5,0 g/10 min, besonders bevorzugt im Bereich von 0,2 bis 0,7 g/10 min, bestimmt nach ISO 1133 bei einer Temperatur von 190°C und einer Ladung von 2,16 kg, aufweist.

**3.** Flammhemmende Polymerzusammensetzung nach Anspruch 1 oder 2, wobei
Komponente (A) weiterhin Einheiten mit hydrolysierbaren Silangruppen umfasst, wobei HLZ:RW
die Einheiten mit hydrolysierbaren Silangruppen vorzugsweise durch die Formel (I) dargestellt werden

$$R^1SiR^2_qY_{3-q} \qquad (I)$$

wobei

$R^1$ eine ethylenisch ungesättigte Hydrocarbyl-, Hydrocarbyloxy- oder (Meth)acryloxy-Hydrocarbylgruppe ist,
jedes $R^2$ unabhängig eine aliphatische gesättigte Kohlenwasserstoffgruppe ist,
Y, das gleich oder verschieden sein kann, eine hydrolysierbare organische Gruppe ist und

q 0, 1 oder 2 ist, wobei die Menge der Einheiten mit hydrolysierbaren Silangruppen vorzugsweise im Bereich von 0,2 bis 4,0 Gew.-%, besonders bevorzugt im Bereich von 0,4 bis 2,0 Gew.-%, bezogen auf das Gesamtgewicht der Komponente (A), liegt.

**4.** Flammhemmende Polymerzusammensetzung nach einem der vorhergehenden Ansprüche, wobei die Komponente (B) eine Dichte im Bereich von 910 bis 950 kg/m$^3$, vorzugsweise im Bereich von 920 bis 940 kg/m$^3$, bestimmt nach ISO 1183 und/oder eine Schmelzflussrate $MFR_2$ im Bereich von 0,5 bis 5,0 g/10 min, vorzugsweise im Bereich von 1,5 bis 2,5 g/10 min, bestimmt nach ISO 1133 bei einer Temperatur von 190°C für Polyethylen oder 230°C für Polypropylen und einer Belastung von 2,16 kg, aufweist.

**5.** Flammhemmende Polymerzusammensetzung nach einem der vorhergehenden Ansprüche, wobei Komponente (C) eine Silikonflüssigkeit oder Silikongummi ist, ausgewählt aus der Gruppe bestehend aus Polysiloxan, vorzugsweise Polydimethylsiloxan, und Siloxanen, die funktionelle Alkoxy- oder Alkylgruppen enthalten, und Mischungen davon, wobei Komponente (C) vorzugsweise ein organomodifiziertes Siloxan ist.

**6.** Flammhemmende Polymerzusammensetzung nach einem der vorhergehenden Ansprüche, wobei die Komponente (D) ein gemahlenes oder gefälltes Magnesiumhydroxid, vorzugsweise ein gemahlenes Magnesiumhydroxid, ist, noch bevorzugter ist die Komponente (D) ein gemahlenes Magnesiumhydroxid, das mit Stearinsäure oberflächenbehandelt ist.

**7.** Flammhemmende Polymerzusammensetzung nach einem der vorhergehenden Ansprüche, wobei die Komponente (E) ein Copolymer aus Ethylen und 1-Octen ist.

**8.** Flammhemmende Polymerzusammensetzung nach einem der vorhergehenden Ansprüche, wobei die Komponente (F) ein Copolymer aus Ethylen und 1-Hexen ist.

**9.** Flammhemmende Polymerzusammensetzung nach einem der vorangegangenen Ansprüche, umfassend, vorzugsweise bestehend aus

3,0 bis 14,0 Gew.-%, vorzugsweise 4,0 bis 13,0 Gew.-%, besonders bevorzugt 5,5 bis 12,5 Gew.-% der Komponente (A);
0,5 bis 3,5 Gew.-%, vorzugsweise 1,0 bis 3,0 Gew.-%, besonders bevorzugt 1,5 bis 2,5 Gew.-% der Komponente (B);
0,3 bis 2,8 Gew.-%, vorzugsweise 0,5 bis 2,5 Gew.-%, besonders bevorzugt 0,7 bis 2,3 Gew.-% der Komponente (C);
42,5 bis 53,5 Gew.-%, vorzugsweise 45,0 bis 52,5 Gew.-%, besonders bevorzugt 47,5 bis 51,0 Gew.-% der Komponente (D);
3,0 bis 14,0 Gew.-%, vorzugsweise 4,0 bis 13,0 Gew.-%, besonders bevorzugt 5,0 bis 12,5 Gew.-% der Komponente (E);
20,0 bis 32,5 Gew.-%, vorzugsweise 22,0 bis 30,0 Gew.-%, noch bevorzugter 24,0 bis 28,0 Gew.-% der Komponente (F);
0 bis 7,5 Gew.-%, vorzugsweise 0 bis 6,5 Gew.-%, stärker bevorzugt 0 bis 6,0 Gew.-% eines Ruß-Masterbatches, das 30 bis 50 Gew.-% Ruß (G) in einer Matrix auf Polyethylenbasis umfasst, bezogen auf die Gesamtgewichtsmenge des Ruß-Masterbatches; und
0,05 bis 2,5 Gew.-%, vorzugsweise 0,10 bis 1,5 Gew.-%, noch bevorzugter 0,15 bis 1,0 Gew.-% an Additiven, ausgewählt aus der Gruppe bestehend aus Gleitmitteln, UV-Stabilisator, Antioxidantien, Additivträgern, Keimbildnern, Glimmer, Schmorverzögerer und Mischungen davon,
wobei sich alle Gewichtsprozente auf das Gesamtgewicht der flammhemmenden Polymerzusammensetzung beziehen.

**10.** Flammhemmende Polymerzusammensetzung nach einem der vorangehenden Ansprüche, die eine oder mehrere, vorzugsweise alle der folgenden Eigenschaften aufweist:

- eine Zugfestigkeit von 12,5 MPa bis 25,0 MPa, bevorzugt von 13,0 bis 22,5 MPa, noch bevorzugter von 13,5 bis 21,0 MPa, noch weiter bevorzugt von 14,0 bis 20,0 MPa, bestimmt nach ISO 527-1 und ISO 527-2;
- eine Zugfestigkeit von 12,5 MPa bis 25,0 MPa, bevorzugt von 13,0 bis 22,5 MPa, noch bevorzugter von 13,5 bis 21,0 MPa, noch weiter bevorzugt von 14,0 bis 20,0 MPa, bestimmt nach Konditionierung der Probekörper für 240 h bei 110°C gemäß ISO 527-1 und ISO 527-2

• eine Änderung der Zugfestigkeit als Verhältnis zwischen der Zugfestigkeit vor der Konditionierung und der Zugfestigkeit nach der Konditionierung von -5,0 % bis +5,0 %, bevorzugt von -3,5 % bis +3,5 %;
• eine Bruchdehnung von 350% bis 550%, bevorzugt von 370% bis 525%, noch bevorzugter von 390% bis 500%, noch weiter bevorzugt von 400% bis 480%, bestimmt nach ISO 527-1 und ISO 527-2;
• eine Bruchdehnung von 300% bis 500%, bevorzugt von 310% bis 475%, noch bevorzugter von 315% bis 450%, noch weiter bevorzugt von 320% bis 430%, bestimmt nach Konditionierung der Probekörper für 240 h bei 110°C gemäß ISO 527-1 und ISO 527-2;
• eine Änderung der Bruchdehnung als Verhältnis der Bruchdehnung vor der Konditionierung zur Bruchdehnung nach der Konditionierung von 0 % bis 20,0 %, bevorzugt von 5,0 % bis 15,0 %;
• eine Reißfestigkeit bei 23 °C von 8,5 bis 25,0 N/mm, noch bevorzugter von 10,0 bis 22,5 N/mm, noch weiter bevorzugt von 11,0 bis 20,0 N/mm, bestimmt nach BS 6469 Abschnitt 99.1:1992, HD 605 S2:2008 Klausel 2.2.2.2 Methode 2 bei einer Temperatur von 23 °C; und/oder
• eine Reißfestigkeit bei 50°C von 8,5 bis 20,0 N/mm, noch bevorzugter von 9,0 bis 17,5 N/mm, noch weiter bevorzugt von 10,0 bis 15,0 N/mm, bestimmt nach BS 6469 Abschnitt 99.1:1992, HD 605 S2:2008 Klausel 2.2.2.2 Methode 2 bei einer Temperatur von 50°C.

**11.** Flammhemmende Polymerzusammensetzung nach einem der vorangehenden Ansprüche, die eine oder mehrere, vorzugsweise alle der folgenden Eigenschaften aufweist:

• eine Spitzenwärmefreisetzungsrate (pHRR) von 75 bis 250 kW/$m^2$, noch bevorzugter 75 bis 230 kW/$m^2$, noch weiter bevorzugt 75 bis 210 kW/$m^2$, bestimmt in einem Kegelkalorimetertest gemäß ISO 5660-1; und/oder
• eine Gesamtraucherzeugung (TSP) von 0,3 bis 7,5 $m^2$, bevorzugt von 0,5 bis 6,5 $m^2$, noch weiter bevorzugt von 0,7 bis 5,5 $m^2$, bestimmt in einem Kegelkalorimetertest nach ISO 5660-1.

**12.** Gegenstand, der die flammhemmende Polymerzusammensetzung nach einem der vorangehenden Ansprüche enthält.

**13.** Gegenstand nach Anspruch 12, bei dem es sich um einen Draht oder ein Kabel handelt, der/das mindestens eine Schicht mit der flammhemmenden Polymerzusammensetzung nach einem der Ansprüche 1 bis 11 umfasst, vorzugsweise ein Hochspannungskabel, das mindestens eine Schicht mit der flammhemmenden Polymerzusammensetzung nach einem der Ansprüche 1 bis 11 umfasst.

**14.** Gegenstand nach Anspruch 13, wobei die Schicht eine Mantelschicht ist.

**15.** Verwendung einer flammhemmenden Polymerzusammensetzung nach einem der Ansprüche 1 bis 11 in einer flammhemmenden Schicht eines Drahtes oder Kabels.

## Revendications

**1.** Composition de polymère ignifuge comprenant

(A) 2,0 à 15,0 % en poids d'un copolymère d'éthylène comprenant des motifs sélectionnés dans le groupe consistant en l'acrylate de méthyle, le méthacrylate de méthyle ou les mélanges de ceux-ci ;
(B) 0 à 4,0 % en poids d'un polyéthylène et/ou d'un polypropylène contenant des motifs provenant de l'anhydride d'acide maléique ;
(C) 0,1 à 3,0 % en poids d'un fluide de silicone et/ou d'une gomme de silicone ;
(D) 40,0 à 55,0 % en poids d'un hydroxyde de magnésium ;
(E) 2,0 à 15,0 % en poids d'un copolymère d'éthylène et de motifs comonomères d'alpha-oléfine ayant de 4 à 10 atomes de carbone, qui présente une masse volumique de 860 à 910 kg/$m^3$, déterminée selon l'ISO 1183 ;
(F) 18,0 à 35,0 % en poids d'un copolymère d'éthylène et de motifs comonomères d'alpha-oléfine ayant de 4 à 10 atomes de carbone, qui présente une masse volumique de 920 à 965 kg/$m^3$, déterminée selon l'ISO 1183, et un indice de fluidité à l'état fondu $MFR_5$ de 0,05 à 2,50 g/10 min, déterminé selon l'ISO 1133 à une température de 190 °C et une charge de 5,0 kg ; et
(G) 0 à 8,0 % en poids d'un noir de carbone,

dans laquelle tous les pourcentages en poids sont basés sur le poids total de la composition de polymère ignifuge.

2. Composition de polymère ignifuge selon la revendication 1, dans laquelle le composant (A) présente une masse volumique dans la plage de 920 à 960 kg/$m^3$, de préférence dans la plage de 935 à 950 kg/$m^3$, déterminée selon l'ISO 1183 et/ou un indice de fluidité à l'état fondu $MFR_2$ dans la plage de 0,1 à 10 g/10 min, de préférence dans la plage de 0,1 à 5,0 g/10 min, de manière davantage préférée dans la plage de 0,2 à 0,7 g/10 min, déterminé selon l'ISO 1133 à une température de 190 °C et une charge de 2,16 kg.

3. Composition de polymère ignifuge selon les revendications 1 ou 2, dans laquelle le composant (A) comprend en outre des motifs ayant des groupes silane hydrolysable, dans laquelle les unités ayant des groupes silane hydrolysable sont représentées de préférence par la formule (I)

$$R^1SiR^2_qY_{3-q} \qquad (I)$$

dans laquelle

$R^1$ est un groupe hydrocarbyle, hydrocarbyloxy ou (méth)acryloxy hydrocarbyle à insaturation éthylénique,
chaque $R^2$ est indépendamment un groupe hydrocarbyle aliphatique saturé,
les Y, qui peuvent être identiques ou différents, sont un groupe organique hydrolysable et
q est 0, 1 ou 2, dans laquelle la quantité de motifs ayant des groupes silane hydrolysable est de préférence dans la plage de 0,2 à 4,0 % en poids, de manière davantage préférée dans la plage de 0,4 à 2,0 % en poids, sur la base du poids total du composant (A).

4. Composition de polymère ignifuge selon l'une quelconque des revendications précédentes, dans laquelle le composant (B) présente une masse volumique dans la plage de 910 à 950 kg/$m^3$, de préférence dans la plage de 920 à 940 kg/$m^3$, déterminée selon l'ISO 1183 et/ou un indice de fluidité à l'état fondu $MFR_2$ dans la plage de 0,5 à 5,0 g/10 min, de préférence dans la plage de 1,5 à 2,5 g/10 min, déterminé selon l'ISO 1133 à une température de 190 °C pour le polyéthylène ou 230 °C pour le polypropylène et une charge de 2,16 kg.

5. Composition de polymère ignifuge selon l'une quelconque des revendications précédentes, dans laquelle le composant (C) est un fluide de silicone ou une gomme de silicone sélectionné dans le groupe consistant en un polysiloxane, de préférence un polydiméthylsiloxane, et les siloxanes contenant des groupes fonctionnels alcoxy ou alkyle et les mélanges de ceux-ci, de préférence le composant (C) est un siloxane organo-modifié.

6. Composition de polymère ignifuge selon l'une quelconque des revendications précédentes, dans laquelle le composant (D) est un hydroxyde de magnésium broyé ou précipité, de préférence un hydroxyde de magnésium broyé, de manière davantage préférée le composant (D) est un hydroxyde de magnésium broyé, qui est traité en surface avec de l'acide stéarique.

7. Composition de polymère ignifuge selon l'une quelconque des revendications précédentes, dans laquelle le composant (E) est un copolymère d'éthylène et de 1-octène.

8. Composition de polymère ignifuge selon l'une quelconque des revendications précédentes, dans laquelle le composant (F) est un copolymère d'éthylène et de 1-hexène.

9. Composition de polymère ignifuge selon l'une quelconque des revendications précédentes comprenant, de préférence consistant en

3,0 à 14,0 % en poids, de préférence 4,0 à 13,0 % en poids, de manière davantage préférée 5,5 à 12,5 % en poids de composant (A) ;
0,5 à 3,5 % en poids, de préférence 1,0 à 3,0 % en poids, de manière davantage préférée 1,5 à 2,5 % en poids de composant (B) ;
0,3 à 2,8 % en poids, de préférence 0,5 à 2,5 % en poids, de manière davantage préférée 0,7 à 2,3 % en poids de composant (C) ;
42,5 à 53,5 % en poids, de préférence 45,0 à 52,5 % en poids, de manière davantage préférée 47,5 à 51,0 % en poids de composant (D) ;
3,0 à 14,0 % en poids, de préférence 4,0 à 13,0 % en poids, de manière davantage préférée 5,0 à 12,5 % en poids de composant (E) ;
20,0 à 32,5 % en poids, de préférence 22,0 à 30,0 % en poids, de manière davantage préférée 24,0 à 28,0 % en poids de composant (F) ;

0 à 7,5 % en poids, de préférence 0 à 6,5 % en poids, de manière davantage préférée 0 à 6,0 % en poids d'un mélange maître de noir de carbone comprenant 30 à 50 % en poids de noir de carbone (G) dans une matrice à base de polyéthylène, sur la base de la quantité totale en poids du mélange maître de noir de carbone ; et 0,05 à 2,5 % en poids, de préférence de 0,10 à 1,5 % en poids, de manière davantage préférée de 0,15 à 1,0 % en poids d'additifs sélectionnés dans le groupe consistant en les agents de glissement, les stabilisants UV, les antioxydants, les supports d'additif, les agents de nucléation, un mica, un retardateur de vulcanisation prématurée et les mélanges de ceux-ci, dans laquelle tous les pourcentages en poids sont basés sur le poids total de la composition de polymère ignifuge.

**10.** Composition de polymère ignifuge selon l'une quelconque des revendications précédentes ayant une ou plusieurs, de préférence la totalité, des propriétés suivantes :

- une résistance à la traction de 12,5 MPa à 25,0 MPa, de préférence de 13,0 à 22,5 MPa, de manière davantage préférée de 13,5 à 21,0 MPa, de manière encore plus préférée de 14,0 à 20,0 MPa, déterminée selon l'ISO 527-1 et l'ISO 527-2 ;
- une résistance à la traction de 12,5 MPa à 25,0 MPa, de préférence de 13,0 à 22,5 MPa, de manière davantage préférée de 13,5 à 21,0 MPa, de manière encore plus préférée de 14,0 à 20,0 MPa, déterminée après le conditionnement des éprouvettes pendant 240 h à 110 °C selon l'ISO 527-1 et l'ISO 527-2
- un changement de résistance à la traction, sous la forme du rapport de la résistance à la traction avant conditionnement sur la résistance à la traction après conditionnement, de -5,0 % à +5,0 %, de préférence de -3,5 % à +3,5 % ;
- un allongement à la rupture de 350 % à 550 %, de préférence de 370 % à 525 %, de manière davantage préférée de 390 % à 500 %, de manière encore plus préférée de 400 % à 480 %, déterminé selon l'ISO 527-1 et l'ISO 527-2 ;
- un allongement à la rupture de 300 % à 500 %, de préférence de 310 % à 475 %, de manière davantage préférée de 315 % à 450 %, de manière encore plus préférée de 320 % à 430 %, déterminé après le conditionnement des éprouvettes pendant 240 h à 110 °C selon l'ISO 527-1 et l'ISO 527-2 ;
- un changement d'allongement à la rupture, sous la forme du rapport de l'allongement à la rupture avant conditionnement sur l'allongement à la rupture après conditionnement de 0 % à 20,0 %, de préférence de 5,0 % à 15,0 % ;
- une résistance à la déchirure à 23 °C de 8,5 à 25,0 N/mm, de manière davantage préférée de 10,0 à 22,5 N/mm, de manière encore plus préférée de 11,0 à 20,0 N/mm, déterminée selon le BS 6469 section 99.1:1992, HD 605 S2:2008 Clause 2.2.2.2 Méthode 2 à une température de 23 °C ; et/ou
- une résistance à la déchirure à 50 °C de 8,5 à 20,0 N/mm, de manière davantage préférée de 9,0 à 17,5 N/mm, de manière encore plus préférée de 10,0 à 15,0 N/mm, déterminée selon le BS 6469 section 99.1:1992, HD 605 S2:2008 Clause 2.2.2.2 Méthode 2 à une température de 50 °C.

**11.** Composition de polymère ignifuge selon l'une quelconque des revendications précédentes ayant une ou plusieurs, de préférence la totalité, des propriétés suivantes :

- un taux maximum de débit calorifique (pHRR) de 75 à 250 $kW/m^2$, de manière davantage préférée de 75 à 230 $kW/m^2$, de manière encore plus préférée de 75 à 210 $kW/m^2$, déterminé dans un essai au calorimètre à cône selon l'ISO 5660-1 ; et/ou
- une production totale de fumée (TSP) de 0,3 à 7,5 $m^2$, de préférence de 0,5 à 6,5 $m^2$, de manière encore plus préférée de 0,7 à 5,5 $m^2$, déterminée dans un essai au calorimètre à cône selon l'ISO 5660-1.

**12.** Article comprenant la composition de polymère ignifuge selon l'une quelconque des revendications précédentes.

**13.** Article selon la revendication 12, qui est un fil ou un câble comprenant au moins une couche comprenant ladite composition de polymère ignifuge selon l'une quelconque des revendications 1 à 11, de préférence un câble haute tension comprenant au moins une couche comprenant ladite composition de polymère ignifuge selon l'une quelconque des revendications 1 à 11

**14.** Article selon la revendication 13, dans lequel la couche est une couche de gainage.

**15.** Utilisation d'une composition de polymère ignifuge selon l'une quelconque des revendications 1 à 11 dans une couche ignifuge d'un fil ou d'un câble.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021111006 A1
- EP 517868 A
- EP 1254923 A1
- WO 2005003199 A1
- EP 0449939 A1
- WO 2013159942 A2
- WO 2007137711 A1
- WO 20131599442 A2


### Non-patent literature cited in the description


- **KLIMKE, K. ; PARKINSON, M., PIEL, C. ; KAMINSKY, W. ; SPIESS, H.W. ; VLFILHELM, M.** *Macromol. Chem. Phys,* 2006, vol. 207, 382
- **PARKINSON, M. ; KLIMKE, K. ; SPIESS, H.W. ; V\FILHELM, M.** *Macromol. Chem. Phys.,* 2007, vol. 208, 2128
- **POLLARD, M. ; KLIMKE, K. ; GRAF, R. ; SPIESS, H.W ; V\FILHELM, M. ; SPERBER, O. ; PIEL, C. ; KAMINSKY, W.** *Macromolecules,* 2004, vol. 37, 813
- **CASTIGNOLLES, P. ; GRAF, R. ; PARKINSON, M. ; V\FILHELM, M. ; GABORIEAU, M.** *Polymer 50,* 2009, 2373
- **A.J. BRANDOLINI ; DD. HILLS.** NMR spectra of polymers and polymer additives. Marcel Deker Inc, 2000